(19) Europäisches Patentamt
European Patent Office
Office européen des brevets

(11) Veröffentlichungsnummer: **0 335 235 B1**

(12) **EUROPÄISCHE PATENTSCHRIFT**

(45) Veröffentlichungstag der Patentschrift: **14.12.94**

(51) Int. Cl.[5]: **C08F 279/00**, //(C08F279/00, 212:06)

(21) Anmeldenummer: **89105092.4**

(22) Anmeldetag: **22.03.89**

(54) **Schlagfeste thermoplastische Formmasse und deren Verwendung.**

(30) Priorität: **31.03.88 DE 3811014**

(43) Veröffentlichungstag der Anmeldung:
**04.10.89 Patentblatt 89/40**

(45) Bekanntmachung des Hinweises auf die Patenterteilung:
**14.12.94 Patentblatt 94/50**

(84) Benannte Vertragsstaaten:
**DE ES FR GB IT NL**

(56) Entgegenhaltungen:
**WO-A-87/00188**
**BE-A- 687 027**
**DE-A- 1 495 687**
**FR-A- 1 337 325**
**US-A- 3 878 265**

(73) Patentinhaber: **BASF Aktiengesellschaft**
**Carl-Bosch-Strasse 38**
**D-67063 Ludwigshafen (DE)**

(72) Erfinder: **Bueschl, Rainer Dr.**
**Hollandstrasse 14**
**D-6701 Roedersheim-Gronau (DE)**
Erfinder: **Echte, Adolf, Prof. Dr.**
**Leuschnerstrasse 42**
**D-6700 Ludwigshafen (DE)**
Erfinder: **Schulte, Konrad, Dr.**
**Allemanenstrasse 4**
**6704 Mutterstadt (DE)**
Erfinder: **Mittnacht, Hans, Dr.**
**Zinkgraefstrasse 44**
**D-6940 Weinheim (DE)**

**EP 0 335 235 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine schlagfeste, spannungsrißbeständige thermoplastische Formmasse, die, jeweils bezogen auf A + B, enthält:

A: 80 bis 55 Gew.% einer Hartmatrix aus einem Copolymeren von mindestens 98 Gew.-% eines vinylaromatischen Monomeren $a_{11}$ mit 8 bis 10 C-Atomen und mindestens einem Comonomeren $a_{12}$ in einem Anteil von 0, 1 bis 2 Gew.%, bezogen auf A, und

B: 45 bis 20 Gew.% einer gleichmäßig in der Hartmatrix verteilten Weichphase, die einen mittleren Teilchendurchmesser, $d_{50}$ (Volumenmittel), von 3,5 bis 9 $\mu$m aufweist und erhältlich ist durch Polymerisation der Mischung der Monomeren $a_{11}$ und $a_{12}$ in Gegenwart eines Elastomeren (Kautschuk) unter anschließender Gewinnung des Wertprodukts.

Zum Stand der Technik werden genannt:

(1) DE-AS 25 25 019
(2) DE-OS 31 00 785
(3) DE-OS 37 02 037
(4) EP-A1 00 29 174
(5) EP-A1 02 50 836 und
(6) DE-A-14 95 687.

Es ist bekannt, daß zur Herstellung von Kühlschrankinnenbehältern schlagfestes Polystyrol mit guter Beständigkeit gegenüber Spannungsrißkorrosion verwendet wird. Aus (1) sind Formmassen bekannt, deren Hartmatrix ausschließlich aus Polystyrol aufgebaut ist, die sich für diesen Zweck eignen.

Aus (2) und (3) sind ebenfalls spannungsrißbeständige Formmassen bekannt, die in der Hartmatrix bis zu 12 Gew.% eines Comonomeren, z.B. ein ethylenisch ungesättigtes Nitril, ein Acryl- oder Methacrylsäurederivat enthalten. Auch diese Formmassen sind aufgrund ihrer Spannungsrißbeständigkeit für Kühlmöbel geeignet.

In (4) ist ein Verfahren zur Herstellung einer thermoplastischen 2-phasigen Formmasse in Gegenwart eines ionischen Vernetzers beschrieben, deren Hartmatrix als Comonomers eine Säure enthält.

Weiterhin ist bekannt, daß Kühlschrankinnenbehälter bei der Montage des Kühlschrankes mit Polyurethanschaum hinterschäumt werden.

Nachteilig an den Formmassen gemäß (1) ist, daß sie nicht an dem PU-Schaum haften, weshalb sich dieser schon beim Einwirken geringer Kräfte ablöst. Dadurch wird die Stabilität der gesamten Konstruktion nachteilig beeinflußt.

Die Formmassen gemäß (2) und (3) besitzen zwar eine ausreichende Haftung an Polyurethanschaum, nachteilig ist jedoch, daß sich das Fließverhalten der Polymerschmelze durch derart große Mengen an polaren Comonomeren verschlechtert, wodurch die Verarbeitbarkeit erheblich erschwert und die Anwendung sogar in Frage gestellt wird. Durch Absenken des Molekulargewichts kann diesem Effekt zwar entgegengesteuert werden, jedoch ist dem Fachmann bekannt, daß darunter üblicherweise die mechanischen Eigenschaften, wie die Schlagzähigkeit, leiden.

Aus (6) ist ein spezielles Polymerisationsverfahren für insbesondere Styrol bekannt, bei dem neben Styrol auch untergeordnete Mengen an anderen (Co)Monomeren, z.B. MMA, verwendet werden können; es gibt aber keinen Hinweis, daß ganz geringe Mengen spezieller Comonomeren eine besondere Wirkung entfalten.

In (5) wird gelehrt, daß durch Copolymerisation von Styrol mit geringen Anteilen an Monomeren mit aciden Gruppen, wie Itaconsäure, Fumarsäure, Acrylsäure oder Methacrylsäure Produkte mit guter Schaumhaftung zugänglich sind.

Es liegt allerdings in der aciden Natur dieser Comonomeren, daß sie in Produktionsanlagen, die nicht mit Edelstahl ausgelegt sind, die verwendeten Leitungs- und Kesselmaterialien angreifen.

Weiterhin nachteilig ist, daß bei der in (2) beschriebenen Formmasse das giftige Acrylnitril gehandhabt werden muß.

Aufgabe der vorliegenden Erfindung war es daher, Formmassen aus geeigneten Comonomeren zu finden, die schlagfest und spannungsrißbeständig sind und die üblichen Produktionsanlagen nicht angreifen.

Diese Aufgabe wird gelöst durch eine schlagfeste und zugleich Spannungsrißbeständige, an Polyurethanschäumen haftende thermoplastische Formmasse, die, bezogen auf A + B, enthält:

A: 80 bis 55 Gew.% einer Hartmatrix aus einem Copolymeren von mindestens 98 Gew.-% Einheiten eines vinylaromatischen Monomeren $a_{11}$ mit 8 bis 10 C-Atomen und mindestens eines Comonomeren $a_{12}$ in einem Anteil von 0,1 bis 2 Gew.%, bezogen auf A,
und

B: 45 bis 20 Gew.% einer gleichmäßig in der Hartmatrix verteilten Weichphase, die einen mittleren

Teilchendurchmesser, $d_{50}$ (Volumenmittel), von 3,5 bis 9 μm aufweist wie sie erhalten wird durch Polymerisation der Mischung der Monomeren $a_{11}$ und $a_{12}$ in Gegenwart eines Elastomeren (Kautschuk) unter anschließender Gewinnung des Wertprodukts,

und die dadurch gekennzeichnet ist, daß das Comonomere $a_{12}$ ausgewähltist aus Acrylamid, Methacrylamid, N-Methylacrylamid oder N-Methyl-methacrylamidoder die allgemeine Formel I besitzt

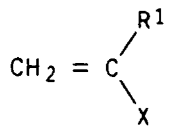

(I)

in der X für die Reste $-OR^2$, $COOR^2$ oder $-CONHR^3$ steht und

$R^1$ Wasserstoff oder Methyl und

$R^2$ und $R^3$ jeweils einen Alkylrest mit 1 bzw. 2 C-Atomen, der mindestens eine OH-Gruppe oder eine Epoxidgruppe oder mindestens eine andere polare Gruppe trägt, bedeuten.

Die erfindungsgemäße Formmasse ist 2-phasig aufgebaut und enthält eine Hartmatrix A und eine Weichphase B. Während oder nach der Herstellung der Formmassen werden bei Bedarf übliche Zusatzstoffe (Komponente C) zugesetzt.

Die Formmasse enthält, bezogen auf A + B: vorzugsweise 75 bis 55 Gew.% A und 25 bis 45 Gew.-% B.

Bezogen auf 100 Gew.-Teile A + B können 0,5 bis 25 Gew.-Teile, vorzugsweise 1 bis 20 Gew.-Teile C zugegen sein.

Komponente A

Die Komponente A der erfindungsgemäßen Formmasse ist aus einem Copolymerisat von mindestens einem vinylaromatischen Monomeren $a_{11}$ mit 8 bis 10 C-Atomen und mindestens einem Comonomeren $a_{12}$ in einem Anteil von 0,1 bis 2 Gew.%, bezogen auf A, aufgebaut bzw. sie besteht daraus.

Bezogen auf A, sind z.B. 98 bis 99,90 Gew.% des vinylaromatischen Monomeren $a_{11}$ und 0,10 bis 2 Gew.% des Comonomeren $a_{12}$ im Copolymerisat (Hartmatrix) einpolymerisiert. Bevorzugt ist der Anteil $a_{12}$ 0,2 bis 2 Gew. -%.

Die Viskositätszahl der Hartmatrix soll 60 bis 90 ml/g (0,5 %ige Lösung in Toluol bei 23 °C) und insbesondere 65 bis 80 ml/g betragen.

Als monovinylaromatische Monomere $a_{11}$ mit 8 bis 10 C-Atomen kommt dabei insbesondere Styrol, ferner die kern- oder seitenkettalkylierten Styrole, wie α-Methylstyrol und p-Methylstyrol in Betracht. Vorzugsweise wird jedoch ausschließlich Styrol verwendet.

Als von den Monomeren $a_{11}$ verschiedene Comonomere $a_{12}$ werden solche aus Monomeren der allgemeinen Formel $H_2C=CR^1X$ (I) verwendet, wobei X für die Reste $-OR^2$, oder $-COOR^2$ oder $-CONHR^3$ steht und

$R^1$ Wasserstoff oder Methyl und

$R^2$ und $R^3$ jeweils einen Alkylrest mit 1 bzw. 2 C-Atomen, der mindestens eine OH-Gruppe oder eine Epoxidgruppe oder mindestens eine andere polare Gruppe bedeuten.

Als bevorzugte Comonomere seien genannt Acrylamid, Methacrylamid, N-Methacrylamid (oder) N-Methylmethacrylamid.

Außerdem können N-substituierten Acrylamide bzw. Methacrylamide verwendet werden, die in ihrem organischen Rest weitere polare Gruppen enthalten wie p-Hydroxylmethacrylsäureanilid oder N-(3-Hydroxy-2,2-dimethylpropyl)methacrylamid.

Als bevorzugte Beispiele für einzusetzende Comonomere $a_{12}$ seien mit Hydroxyalkylresten genannt Hydroxyethylacrylat, Hydroxyethylmethacrylat, Hydroxypropylacrylat bzw. methacrylat Butandiolmonoacrylat bzw. -methacrylat.

Es können auch andere Acrylate oder Methacrylate mit polaren Gruppen in der Alkoholkomponente des Esters mitverwendet werden, wie 2-Cyanoethyl-acrylat, Furfuryl-2-acrylat, 2-N-Morpholinoethylacrylat oder die entsprechenden Methacrylate.

Diese Monomeren werden bevorzugt ausgewählt aus der Gruppe der Hydroxialkylacrylate, der Hydroxialkylmethacrylate oder Mischungen davon, wobei insbesondere die Ethyl- und Propylderivate bevorzugt sind.

Bevorzugte Beispiele für Comonomere mit einer Epoxygruppe im Molekül sind Glycidylacrylat und Glycidylmethacrylat.

Komponente B

Die erfindungsgemäße Formmasse weist als Komponente B eine Weichphase auf, die fein dispergiert in der Hartmatrix vorliegt. Die Weichphase kann durch elektronenmikroskopische Aufnahmen des Endprodukts, d.h. der Formmasse, nachgewiesen werden. Der Anteil der Weichphase wird durch Bestimmung des Gelgehalts ermittelt. Bei der Weichphase handelt es sich um ein Propfmischpolymerisat der Monomeren $a_{11}$ und $a_{12}$ der Hartmatrix (also eines Copolymerisates) auf ein Elastomeres (Kautschuk) als Propfgrundlage. Die Herstellung und Dispergierung ist dem Fachmann bekannt.

Als Elastomer oder Kautschuk werden die üblicherweise für die Schlagfestmodifizierung von Styrolpolymerisaten gebräuchlichen natürlichen und synthetischen Kautschuke eingesetzt. Im Sinne der Erfindung geeignet sind Polybutadien, Polyisopren und Mischpolymerisate des Butadiens und/oder des Isoprens mit Styrol, die eine Glastemperatur unterhalb von -20 °c besitzen. Die Mischpolymerisate des Butadiens oder des Isoprens mit Styrol können die Monomeren sowohl in statistischer Verteilung als auch blockförmig eingebaut erhalten. Besonders bevorzugt ist Polybutadien mit 30 bis 99 % cis-1,4-Einheiten.

Bei der Herstellung der Weichphase wird das Elastomere in einem Anteil von z.B. 4 bis 12 Gew.-%, vorzugsweise von 6 bis 12 Gew.-%, bezogen auf die Mischung der Monomeren $a_{11} + a_{12}$ angewendet und bei Bedarf ein Lösungsmittel und Hilfsstoffe wie Regler, Gleitmittel etc. mitverwendet.

Das mittlere Molekulargewicht der Elastomeren liegt im Bereich von 50.000 bis 400.000, insbesondere von 200 000 bis 300 000 (Gew.-Mittel). Die Teilchen der Weichphase bestehen aus Zellenteilchen, die einen mittleren Teilchendurchmesser, $d_{50}$-Wert (Volumenmittel aus Bildanalyse) von 3,5 bis 9 µm, vorzugsweise von 4 bis 6 µm bei einer Verteilungsbreite ($d_{90}$-$d_{10}$)-Wert von 4 bis 10 µm aufweisen. Das in der Weichphase occludierte und gepfropfte Copolymerisat aus $a_{11}$ und $a_{12}$ wird dieser zugerechnet.

Komponente C

Zusätzlich zu A + B kann die erfindungsgemäße Formmasse Zusatzstoffe, enthalten. Diese Komponente C kann schon bei der Herstellung der Formmasse zugegen sein oder aber für die Verarbeitung in die Formmasse eingemischt werden.

Typische Hilfsmittel für die Herstellung der Formmasse sind Mineralöl, Ester von aromatischen oder aliphatichen Carbonsäuren mit aliphatischen Alkoholen, Polyalkylenoxide auf Basis von Ethylenoxid und/oder Propylenoxid, Molekulargewichtsregler, Schutzkolloide, Antioxidantien usw. Als Hilfsmittel sind ferner Gleitmittel, wie Zinkstearat und andere Stearate, Farbstoffe, Stabilisatoren und Flammschutzmittel in den üblichen Mengen nützlich.

Die erfindungsgemäße Formmasse soll folgende Eigenschaften aufweisen, die teils durch die Wahl der Hartmatrix, teils der Weichphase oder durch die Herstellung veränderbar und von Fall zu Fall durch einen einfachen Vorversuch festzulegen sind:

1. Der Quellungsindex der Weichphase soll im Bereich von 9 bis 13 liegen.
2. Der Gelgehalt soll im Bereich von 25 bis 35 liegen.
3. Die Viskositätszahl (VZ) der Hartmatrix soll 60 bis 90 [ml/g] betragen.
4. Der mittlere Teilchendurchmesser, $d_{50}$-Wert (Volumenmittel durch Bildanalyse) soll im Bereich von 3,5 bis 9 µm, vorzugsweise von 4 bis 6 µm, bei einem $d_{90}$-$d_{10}$-Wert im Bereich von 4 bis 10 µm liegen.
5. Die Schlagzähigkeit soll 5 bis 25 [Nm] betragen.
6. Die Reißfestigkeit soll 5 bis 15 % oberhalb der zugehörigen Streckgrenze liegen.

Methoden zur Bestimmung der Parameter 1 bis 6 sind auch in den Druckschriften (1) bis (4) angegeben, soweit hier nicht ausführlich dargestellt.

Herstellung der erfindungsgemäßen Formmasse

Die Herstellung der erfindungsgemäßen Formmassen erfolgt durch Polymerisation des Monomerengemisches $a_{11}$ und $a_{12}$ in Gegenwart des Kautschuks, wobei der Kautschuk zunächst in der Monomerenmischung gelöst und diese Ausgangslösung dann unter Rühren polymerisiert wird. Bei einer solchen Polymerisation spricht man von einer Masse-Polymerisation; es entstehen nebeneinander Copolymere A und Pfropfcopolymere B.

Dem Ansatz kann bis zu 50 Gew.-%, bezogen auf die Monomerenmischung, eines Lösungsmittels zugegeben werden. Geeignet sind hierfür beispielsweise aromatische Kohlenwasserstoffe wie Toluol, Ethylbenzol oder die Xylole. Bei einer solchen Polymerisation spricht man von einer Lösungspolymerisation.

Die erfindungsgemäße Formmasse kann außerdem durch anfängliche Polymerisation in Masse und dann in wäßriger Suspension erhalten werden. Hierzu wird die Lösung des Kautschuks in den Monomeren bis zu einem Umsatz von ca. 35 % in Masse unter Rühren vorpolymerisiert, dann in Wasser suspendiert und anschließend auspolymerisiert.

Bei allen drei Ausführungsformen wird in der Regel in einem Temperaturbereich von 50 bis 250 °C, vorzugsweise 80 bis 200 °C, polymerisiert. Der Polymerisationsstart kann entweder thermisch oder durch Zugabe üblicher öllöslicher, in Radikale zerfallender Initiatoren, wie Peroxiden oder Azo-Verbindungen erfolgen.

Die Polymerisation kann kontinuierlich oder absatzweise durchgeführt werden.

Das kontinuierliche Verfahren ist in DE-AS 17 70 392, das absatzweise in DE-AS 26 13 352 hinreichend beschrieben.

Wenn die Masse ganz durchpolymerisiert ist, dann ist eine Hartmatrix aus dem Copolymerisat mit einer darin eingelagerten Weichphase entstanden.

Unter Weichphase (Gelgehalt) wird der bei Raumtemperatur (23 °C) in Toluol unlösliche Anteil des schlagfest modifizierten Polymerisats abzüglich etwaiger Pigmente Verstanden werden. Diese Weichphase ist heterogen aufgebaut und wird während des Herstellungsprozesses gebildet. Ihre Menge und ihr Zerteilungsgrad wird durch die Verfahrensbedingungen beeinflußt.

Die zu polymerisierende Kautschuklösung trennt sich kurz nach Beginn der Polymerisation bekanntlich in zwei Phasen, von denen zunächst die Lösung des Kautschuks in der Monomerenmischung die kohärente Phase bildet, während die zweite, eine Lösung des Copolymerisats in den Monomeren, in der ersten in Tröpfchen suspendiert bleibt. Bei steigendem Umsatz vermehrt sich die Menge der zweiten Phase auf Kosten der ersten und unter Monomerenverbrauch; dabei tritt dann ein Wechsel der Phasenkohärenz auf, bei dem sich Tropfen der Kautschuklösung in der Copolymerisatlösung ausbilden, die ihrerseits kleinere Tropfen der jetzt äußeren Phase fest eingeschlossen enthalten.

Neben diesem Vorgang läuft eine Pfropfreaktion ab, bei der chemische Verknüpfungen zwischen den Kautschukmolekülen und dem Copolymerisat unter Bildung von Pfropf-Copolymeren aus beiden Bestandteilen gebildet werden. Dieser Vorgang ist bekannt und z.B. bei Fischer, Angew. Makromol. Chem. 33, S. 35-74 (1973), ausführlich beschrieben.

Die in den Beispielen und Vergleichsversuchen beschriebenen Parameter wurden wie folgt bestimmt:

1. Die Viskositätszahl, VZ, der Hartmatrix in ml/g wird nach DIN 53 724 bestimmt (0,5%ige Lösung in Toluol bei 23 °C).

2. Als Maß für die Schlagzähigkeit wird die 50 %ige Schädigungsarbeit, $W_{50}$, [N.m] aus einem Fallbolzenversuch gemäß DIN 53 443 bei T = 23 °C an bei T = 280 °C spritzgegossenen Testkästchen angegeben.

3. Von den Produkten der Beispiele und von Vergleichsproben wurden in bekannter Weise elektronenmikroskopische Dünnschichtaufnahmen angefertigt, die zur Bestimmung der Teilchengröße und Verteilung der Weichphase dienten.

Die Bestimmung geschieht mit Hilfe der Bildanalyse nach dem Verfahren, wie es von W. Alex in Zeitschrift für Aufbereitung und Verfahrenstechnik 13, (1972) im Kap. 3.11 beschrieben ist. Die Zahl der ausgewerteten Teilchen lag zwischen 1500 und 6500.

Bei der Angabe der mittleren Teilchengröße handelt es sich in allen Fällen um das Volumenmittel der Teilchengröße. Die Bildanalyse liefert die integrale Volumenverteilung des Teilchendurchmessers einer Probe. Hieraus läßt sich entnehmen, wieviel Volumenprozent der Teilchen einen Durchmesser gleich oder unter einer bestimmten Größe haben. Der mittlere Teilchendurchmesser, der auch als $d_{50}$-Wert der integralen Volumenverteilung bezeichnet wird, ist dabei als der Teilchendurchmesser definiert, bei dem 50 Vol.-% der Teilchen einen größeren Durchmesser aufweisen als dem $d_{50}$-Wert entspricht. Zur Charakterisierung der Teilchengrößenverteilung der Kautschukteilchen werden neben dem $d_{50}$-Wert (mittlerer Teilchendurchmesser) die sich ebenfalls aus der integralen Volumenverteilung ergebenden $d_{10}$- bzw. $d_{90}$-Werte herangezogen. Der $d_{10}$- bzw. $d_{90}$-Wert der integralen Volumenverteilung ist dabei entsprechend dem $d_{50}$-Wert definiert mit dem Unterschied, daß sie auf 10 bzw. 90 Vol.-% der Teilchen bezogen sind.

4. Zur Messung der Beständigkeit gegen Spannungsrißkorrosion unter Einfluß von Fetten wurden nach DIN 53 449 gepreßte Normkleinstäbe 23 h in einem Testmedium aus Olivenöl/ölsäure 1 : 1 bei 23 °C gelagert. Anschließend wird in einem Zugversuch die Reißdehnung (%) als Funktion des Kugelübermaßes bestimmt. Zum Vergleich wurden Normkleinstäbe, die 24 h an Luft gelassen wurden, geprüft.

Als Maß für die Spannungsrißbeständigkeit werden die relative und die absolute Restreißdehnung angegeben. Die relative Restreißdehnung wird definiert als

$$\text{relative Restreißdehnung} = \frac{\text{Reißdehnung (Olivenöl/Ölsäure)}}{\text{Reißdehnung (Luft)}} \cdot 100\ [\%]$$

wobei die angegebenen Werte jeweils Mittelwerte über Messungen bei drei verschiedenen Kugelübermaßen von ca. 100, 150 und 200 µm darstellen.

Es werden diejenigen Produkte als spannungsrißbeständig im Sinne der vorliegenden Erfindung eingestuft, die eine relative Restreißdehnung von mehr als 30 % und eine absolute Restreißdehnung von mehr als 10 % besitzen.

Die Beständigkeit gegen Spannungsrißkorrosion nach Einwirkung niedrigsiedender Halogenkohlenwasserstoffe wurde nach einer einstündigen Lagerung von gepreßten Normkleinstäben in einer Frigen-11-Atmosphäre wie vorstehend beschrieben getestet. Hierbei werden die Produkte als spannungsrißbeständig im Sinne der vorliegenden Erfindung eingestuft, die eine relative Restreißdehnung von mehr als 75 % und eine absolute Restreißdehnung von mehr als 10 % besitzen.

5. Die Haftung an Polyurethanschäumen wurde dadurch ermittelt, daß gepreßte Rundscheiben von 6 cm Durchmesser wurden auf eine Unterlage gebracht und mit einer kommerziell erhältlichen aufschäumenden Polyurethan-Mischung (Sprühdose) übergossen wurden. Nach 24 h wurden die Preßplättchen manuell vom Schaum abgezogen. Die Einstufung "gute Schaumhaftung" erfolgt, wenn dabei der Schaum reißt und die Einstufung "schlechte Schaumhaftung" bei einer Trennung an der Grenzfläche von schlagfestem Polystyrol/Polyurethanschaum.

6. Die Fließfähigkeit wurde in Form des Meltindex bei 200 °C und einer Belastung von 5 kp in [g/10 Min] (DIN 53 735) gemessen.

Zur Durchführung der Beispiele und für Vergleichszwecke wurde als Kautschuk (elastomere Pfropfgrundlage) ein Handelsprodukt, ®Buna HX 529 C der Firma Bayer AG, verwendet. Es handelt sich nach Angaben des Herstellers um ein Homopolybutadien mit einem mittleren Molekulargewicht von 295 000 (Gewichtsmittel) und einem Gehalt von 37 % an cis-Struktureinheiten.

Die in den nachfolgenden Beispielen und Vergleichsversuchen angegebenen Mengen beziehen sich, sofern nicht anders angegeben, auf das Gewicht.

Beispiele 1 bis 5 und Vergleichsversuche I und II

Beispiel 1

In einem mit einem Ankerrührer ausgestatteten Kessel mit einem Fassungsvermögen von 5 Litern werden 1736 g Styrol, 152 g Polybutadien (Buna HX 529 C), Methacrylamid, 1,9 g eines sterisch gehinderten Phenols als Stabilisator (®Irganox 1076 von Ciba Geigy) und 0,95 g t-Dodecylmercaptan gegeben. Nachdem sich das Polybutadien vollständig gelöst hat, wird isotherm bei 123 °C und 75 Rührerumdrehungen/Minute bis zu einem Umsatz von 35 %, bezogen auf die Monomeren, polymerisiert. Danach wird in wäßriger Suspension weiterpolymerisiert. Hierzu werden 1,9 g Dicumylperoxid sowie 1800 ml $H_2O$, 18 g eines Suspensionshilfsmittels auf Basis Ethylenoxid (®Luviskol K90 der BASF Aktiengesellschaft) und 1,8 g Natriumpyrophosphat zugegeben. In Suspension wird bei 300 Rührerumdrehungen pro Minute 6 h isotherm bei 130 °C und 6 h isotherm bei 140 °C bis zu einem Umsatz von mehr als 99 %, bezogen auf die Monomeren, polymerisiert.

Der Methacrylgehalt am Endprodukt wurde elementaranalytisch bestimmt. Es wurde ein Wert von 0,48 Gew.%, bezogen auf die Formmasse aus Hartmatrix und Weichphase, gefunden. Die VZ der Hartmatrix wurde zu 71,1 bestimmt. Der $d_{50}$-Wert betrug 5,5 µm, der $d_{90}$-$d_{10}$-Wert 6,3 µm.

Beispiele 2 bis 5 und Vergleichsversuche I und II

Die Beispiele 2 bis 5 und die Vergleichsversuche I (ohne Comonomer) und II wurden in der vorstehend beschriebenen Versuchsanordnung durchgeführt, mit der Maßgabe, daß die Menge an Comonomer variiert wurde, so daß die in der Tabelle 1 genannten Gehalte im Endprodukt, bezogen auf A + B, erzielt wurden. In die Tabelle 1 sind die Viskositätszahlen der Matrix, der Gehalt an Weichphase (Gelgehalt), der mittlere Teilchendurchmesser ($d_{50}$) und die Teilchenverteilung ($d_{90}$-$d_{10}$) aufgenommen worden.

Tabelle 1

| Beispiel | Comonomer | | Weichphase (%) | VZ (ml/g) | $d_{50}$ | $d_{90}$-$d_{10}$ |
|---|---|---|---|---|---|---|
| | Art | Menge | | | | |
| 1 | Methacrylamid | 0,5 | 32,9 | 72,9 | 6,2 | 7,2 |
| 2 | Acrylamid | 0,5 | 33,2 | 72,5 | 6,5 | 7,3 |
| 3 | N-Methylmethacrylamid | 0,5 | 33,2 | 72,0 | 6,5 | 6,9 |
| 4 | Methacrylamid | 0,1 | 31,9 | 72,8 | 5,9 | 6,8 |
| 5 | Methacrylamid | 1,95 | 32,5 | 73,0 | 6,0 | 7,1 |
| Vergleichsversuche | | | | | | |
| I | - | | 33,5 | 72,0 | 6,7 | 7,3 |
| II | N-Methylmethacrylamid | 0,01 | 33,5 | 71,9 | 6,8 | 7,1 |

Beim Vergleich der Eigenschaften in Tabelle 2 erkennt man, daß die erfindungsgemäße Formmasse gemäß Beispiel 1 im Bezug auf die Spannungsrißbeständigkeit ansprechend ist. Ferner ist ersichtlich, daß das Polymerisat aus Beispiel 1 gut an PU-Schaum haftet, und daß sich seine Fließfähigkeit nicht verschlechtert hat.

Im Falle Produkte der Beispiele 2 bis 5 ergibt sich eine Kombination aus Spannungsrißbeständigkeit und guter Schaumhaftung.

Dagegen besitzen die Proben der Vergleichsversuche I und II keine Schaumhaftung, wofür ein fehlender (Versuch I) bzw. ein zu geringer (Versuch II) Gehalt an Monomeren $a_{12}$ verantwortlich ist.

Tabelle 2

| Beispiel | Spannungsrißkorrosion (Restreißdehnung) | | | | PU-Schaumhaftung | MFI (g/10') |
|---|---|---|---|---|---|---|
| | Olivenöl/ölsäure | | Frigen | | | |
| | absolut | relativ | absolut | relativ | | |
| 1 | 18 | 41 | 41 | 92 | gut | 4,8 |
| 2 | 20 | 42 | 45 | 93 | gut | 4,7 |
| 3 | 20 | 43 | 44 | 93 | gut | 4,5 |
| 4 | 18 | 41 | 39 | 91 | gut | 4,9 |
| 5 | 17 | 39 | 39 | 90 | gut | 4,8 |
| Vergleichsversuche | | | | | | |
| I | 18 | 37 | 44 | 90 | schlecht | 4,8 |
| II | 16 | 35 | 42 | 91 | schlecht | 4,6 |

Beispiele 6 bis 9 und Vergleichsversuche III und IV

Beispiel 6

In einem mit einem Ankerrührer ausgestatteten Kessel mit einem Fassungsvermögen von 5 Litern werden 1 736 g Styrol, 152 g Polybutadien (Buna HX 529 C), 9,5 g Glycidylmethacrylat, 1,9 g eines sterisch gehinderten Phenols als Stabilisator (®Irganox 1076 von Ciba Geigy) und 0,95 g t-Dodecylmercaptan gegeben. Nachdem sich das Polybutadien vollständig gelöst hat, wird isotherm bei 123°C und 75 Rührerumdrehungen/Minute bis zu einem Umsatz von 35 %, bezogen auf die Monomeren, polymerisiert. Danach wird in wäßriger Suspension weiterpolymerisiert. Hierzu werden 1,9 g Dicumylperoxid sowie 1 800 ml $H_2O$, 18 g eines Suspensionshilfsmittels auf Basis Ethylenoxid (®Luviskol K 90 der BASF Aktiengesellschaft) und 1,8 g Natriumpyrophosphat zugegeben. In Suspension wird bei 300 Rührerumdrehungen pro Minute 6 h isotherm bei 130°C und 6 h isotherm bei 140°C bis zu einem Umsatz von mehr als 99 %, bezogen auf die Monomeren, polymerisiert.

Der Comonomergehalt im Endprodukt wurde elementaranalytisch bestimmt. Es wurde ein Wert von 0,49 Gew.%, bezogen auf die Formmasse aus Hartmatrix und Weichphase, gefunden. Die VZ der Hartmatrix wurde zu 72,5 bestimmt. Der $d_{50}$-Wert betrug 5,8 µm, der $d_{90}$-$d_{10}$-Wert 6,3 µm.

Die Beispiele 7 bis 9 und die Vergleichsversuche II (ohne Comonomer) und IV wurden in der vorstehend beschriebenen Versuchsanordnung durchgeführt, mit der Maßgabe, daß die Menge an Comonomer variiert wurde, so daß die in Tabelle 3 genannten Gehalte im Endprodukt, bezogen auf A + B, erzielt wurden. In die Tabelle sind die Viskositätszahlen der Matrix, der Gehalt an Weichphase (Gelgehalt), der mittlere Teilchendurchmesser ($d_{50}$) und die Teilchenverteilung ($d_{90}$-$d_{10}$) aufgenommen worden.

Tabelle 3

| Beispiel | Comonomer | | Weichphase (%) | VZ (ml/g) | $d_{50}$ (µm) | $d_{90}$-$d_{10}$ (µm) |
|---|---|---|---|---|---|---|
| | Art | Menge (%) | | | | |
| 7 | Glycidylmethacrylat | 1,95 | 31,5 | 70,1 | 5,9 | 6,9 |
| 8 | " | 0, 1 | 32, 1 | 72,4 | 6,9 | 7,2 |
| 9 | " | 0,01 | 33,7 | 72,2 | 6,8 | 7,6 |
| Vergleichsversuche | | | | | | |
| III | - | - | 33,5 | 72,0 | 6,7 | 7,3 |
| IV | Glycidylmethacrylat | 0,01 | 33,1 | 71,6 | 6,6 | 7,3 |

Beim Vergleich der Eigenschaften in Tabelle 4 erkennt man, daß die erfindungsgemäße Formmasse gemäß Beispiel 1 im Bezug auf die Spannungsrißbeständigkeit ansprechend ist. Ferner ist ersichtlich, daß das Polymerisat aus Beispiel 6 gut an PU-Schaum haftet, und daß sich seine Fließfähigkeit nicht verschlechtert hat.

Im Falle Produkte der Beispiele 7, 8 und 9 ergibt sich eine Kombination aus Spannungsrißbeständigkeit und guter Schaumhaftung.

Dagegen besitzen die Proben der Vergleichsversuche III und IV keine Schaumhaftung, wofür ein fehlender (Versuch III) bzw. ein zu geringer (Versuch IV) Gehalt an Monomeren $a_{12}$ verantwortlich ist.

Tabelle 4

| Beispiel | Spannungsrißkorrosion (Restreißdehnung) Olivenöl/Ölsäure absolut | relativ | Frigen absolut | | relativ | PU-Schaumhaftung | MFI (g/10') |
|---|---|---|---|---|---|---|---|
| 6 | 16 | 39 | 41 | 45 | 91 | gut | 4,3 |
| 7 | 19 | 44 | 40 | 43 | 94 | gut | 4,8 |
| 8 | 18 | 38 | 43 | 48 | 89 | gut | 4,3 |
| 9 | 20 | 40 | 45 | 49 | 91 | gut | 4,2 |
| Vergleichsversuche | | | | | | | |
| III | 18 | 37 | 44 | | 90 | schlecht | 4,8 |
| IV | 19 | 41 | 44 | 47 | 93 | schlecht | 4,5 |

Beispiele 10 bis 15 und Vergleichsversuche V und VI

Beispiel 10

In einem mit einem Ankerrührer ausgestatteten Kessel mit einem Fassungsvermögen von 5 Litern werden 1 736 g Styrol, 152 g Polybutadien (Buna HX 529 C), 9,5 g Hydroxyethylmethacrylat, 1,9 g eines sterisch gehinderten Phenols als Stabilisator (®Irganox 1076 von Ciba Geigy) und 0,95 g t-Dodecylmercaptan gegeben. Nachdem sich das Polybutadien vollständig gelöst bat, wird isotherm bei 123°C und 75 Rührerumdrehungen/Minute bis zu einem Umsatz von 35%, bezogen auf die Monomeren, polymerisiert. Danach wird in wäßriger Suspension weiterpolymerisiert. Hierzu werden 1,9 g Dicumylperoxid sowie 1 800 ml $H_2O$, 18 g eines Suspensionshilfsmittels auf Basis Ethylenoxid (®Luviskol K90 der BASF Aktiengesellschaft) und 1,8 g Natriumpyrophosphat zugegeben. In Suspension wird bei 300 Rührerumdrehungen pro Minute 6 h isotherm bei 130°C und 6 h isotherm bei 140°C bis zu einem Umsatz von mehr als 99%, bezogen auf die Monomeren, polymerisiert.

Der Comonomergehalt im Endprodukt wurde elementaranalytisch bestimmt. Es wurde ein Wert von 0,47 Gew.%, bezogen auf die Formmasse aus Hartmatrix und Weichphase, gefunden. Die VZ der Hartmatrix wurde zu 72,5 bestimmt. Der $d_{50}$-Wert betrug 5,1 µm, der $d_{90}$-$d_{10}$-Wert 6,2 µm.

Beispiele 11 bis 15 und Vergleichsversuche V und VI

Die Beispiele 11 bis 16 und die Vergleichsversuche V (ohne Comonomer) und VI wurden in der vorstehend beschriebenen Versuchsanordnung durchgeführt, mit der Maßgabe, daß die Mengen an Comonomer variiert wurde, so daß die in Tabelle 5 genannten Gehalte im Endprodukt, bezogen auf A+B, erzielt wurden. In die Tabelle 5 sind die Viskositätszahlen der Matrix, der Gehalt an Weichphase (Gelgehalt), der mittlere Teilchendurchmesser ($d_{50}$) und die Teilchenverteilung ($d_{90}$-$d_{10}$) aufgenommen worden.

Tabelle 5

| Beispiel | Comonomer | | Weichphase (%) | VZ (ml/g) | $d_{50}$ | $d_{90}$-$d_{10}$ |
|---|---|---|---|---|---|---|
| | Art | Menge(%) | | | | |
| 11 | HPMA[1)] | 0,5 | 33,3 | 72,5 | 6,1 | 7,3 |
| 12 | HPA[2)] | 0,5 | 31,5 | 71,8 | 5,9 | 7,3 |
| 13 | HEA[3)] | 0,5 | 31,9 | 72,2 | 5,7 | 6,8 |
| 14 | HEMA[4)] | 0,1 | 33,4 | 70,9 | 6,6 | 7,7 |
| 15 | HEMA | 1,95 | 31,1 | 68,9 | 5,8 | 6,9 |
| Vergleichsversuche | | | | | | |
| V | - | - | 33,5 | 72,0 | 6,7 | 7,3 |
| VI | HEMA | 0,01 | 33,3 | 71,5 | 6,4 | 7,1 |

*

1) HPMA - Hydroxypropylmethacrylat
2) HPA - Hydroxypropylacrylat
3) HEA - Hydroxyethylacrylat
4) HEMA - Hydroxyethylmethacrylat

Beim Vergleich der Eigenschaften in Tabelle 6 erkennt man, daß die erfindungsgemäße Formmasse gemäß Beispiel 1 im Bezug auf die Spannungsrißbeständigkeit ansprechend ist. Ferner ist ersichtlich, daß das Polymerisat aus Beispiel 1 gut an PU-Schaum haftet, und daß sich seine Fließfähigkeit nicht verschlechtert hat.

Im Falle der Produkte der Beispiele 11 bis 15 ergibt sich eine Kombination aus Spannungsrißbeständigkeit und guter Schaumhaftung.

Dagegen besitzen die Proben der Vergleichsversuche V und VI keine Schaumhaftung, wofür ein fehlender (Versuch VI) bzw. ein zu geringer (Versuch VI) Gehalt an Monomeren $a_{12}$ verantwortlich ist.

Tabelle 6

| Beispiel | Spannungsrißkorrosion (Restreißdehnung) | | | | PU-Schaumhaftung | MFI (g/10') |
|---|---|---|---|---|---|---|
| | Olivenöl/ölsäure | | Frigen | | | |
| | absolut | relativ | absolut | relativ | | |
| 10 | 18 | 39 | 41 | 90 | gut | 4,1 |
| 11 | 20 | 41 | 45 | 93 | gut | 4,6 |
| 12 | 19 | 42 | 41 | 91 | gut | 4,2 |
| 13 | 20 | 42 | 44 | 92 | gut | 4,2 |
| 14 | 19 | 39 | 43 | 88 | gut | 4,8 |
| 15 | 18 | 43 | 40 | 94 | gut | 3,7 |
| Vergleichsversuche | | | | | | |
| V | 18 | 37 | 44 | 90 | schlecht | 4,8 |
| VI | 18 | 38 | 41 | 88 | schlecht | 4,7 |

## Patentansprüche

**1.** Schlagfeste thermoplastische Formmasse, enthaltend, jeweils bezogen auf A + B,

A: 80 bis 55 Gew.-% einer Hartmatrix aus einem Copolymeren von mindestens 98 Gew.-% Einheiten eines vinylaromatischen Monomeren $a_{11}$ mit 8 bis 10 C-Atomen und mindestens eines Comonomeren $a_{12}$ in einem Anteil von 0,1 bis 2 Gew.-%, bezogen auf A, und

B: 45 bis 20 Gew.-% einer gleichmäßig in der Hartmatrix verteilten Weichphase, die einen mittleren Teilchendurchmesser, $d_{50}$ (Volumenmittel), von 3,5 bis 9 $\mu$m aufweist,

wie sie erhalten wird durch Polymerisation der Mischung der Monomeren $a_{11}$ und $a_{12}$ in Gegenwart eines Elastomeren (Kautschuk) unter anschließender Gewinnung des Wertprodukts,
dadurch gekennzeichnet, daß das Comonomere $a_{12}$ ausgewählt ist aus Acrylamid, Methacrylamid, N-Methylacrylamid oder N-Methylmethacrylamid oder die allgemeine Formel 1 besitzt

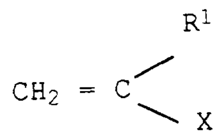

in der X für die Reste -$OR^2$, $COOR^2$ oder -$CONHR^2$ steht und
$R^1$ Wasserstoff oder Methyl und
$R^2$ und $R^3$ jeweils einen Alkylrest mit 1 bzw. 2 bis 10 C-Atomen, der mindestens eine OH-Gruppe oder eine Epoxidgruppe oder mindestens eine andere polare Gruppe trägt, bedeuten.

2. Formmasse nach Anspruch 1, enthaltend als Comonomeres Acrylamid, Methacrylamid, N-Methylacrylamid, N-Methylmethacrylamid oder eine Mischung dieser Monomeren.

3. Formmasse nach Anspruch 1, enthaltend als Comonomeres ein Hydroxialkylacrylat oder ein Hydroxialkylmethacrylat.

4. Formmasse nach Anspruch 3, enthaltend als Monomeres Hydroxyethyl- oder Hydroxypropyl (meth)-acrylat.

5. Formmasse nach Anspruch 1, enthaltend als Comonomer Glycidylacrylat oder Glycidylmethacrylat.

6. Formmasse nach Anspruch 1, enthaltend
   75 bis 55 Gew.% der Hartmatrix A und
   45 bis 25 Gew.% der Weichphase B.

7. Formmasse nach Anspruch 1, wie sie erhalten wird durch Polymerisation der Mischung der Monomeren $a_{11}$ und $a_{12}$ in Gegenwart von 6 bis 12 Gew.% Polybutadien, bezogen auf $a_{11}$ und $a_{12}$, Polybutadien.

8. Formmasse nach Anspruch 1, enthaltend außerdem übliche Zusatzstoffe C in üblichen Mengen.

9. Verwendung der Formmasse gemäß Anspruch 1 zur Herstellung von Formteilen.

## Claims

1. An impact resistant thermoplastic molding composition containing, each percentage being based on A + B,
   A: from 80 to 55 % by weight of a hard matrix of a copolymer containing at least 98 % by weight of units of aromatic vinyl monomer $a_{11}$ of from 8 to 10 carbon atoms and of at least one comonomer $a_{12}$ in a proportion of from 0.1 to 2 % by weight, based on A, and
   B: from 45 to 20 % by weight of a soft phase which, uniformly dispersed in the hard matrix, has an average particle diameter $d_{50}$ (volume average) of from 3.5 to 9 $\mu$m,

   as obtained by polymerization of the mixture of monomers $a_{11}$ and $a_{12}$ in the presence of an elastomer (rubber) and subsequent isolation of the useful product,
   characterized in that the comonomer $a_{12}$ is selected from acrylamide, methacrylamide, N-methylacrylamide or N-methylmethacrylamide or has the general formula I

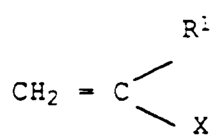

where X is $-OR^2$, $-COOR^2$ or $-CONHR^3$,

$R^1$ is hydrogen or methyl and

$R^2$ and $R^3$ are each alkyl of from 1 or 2 to 10 carbon atoms with at least one OH or epoxy group or at least one other polar group.

**2.** A molding composition as claimed in claim 1, characterized in that the comonomer is acrylamide, methacrylamide, N-methylacrylamide, N-methylmethacrylamide or a mixture thereof.

**3.** A molding composition as claimed in claim 1, characterized in that the comonomer is a hydroxyalkyl acrylate or a hydroxyalkyl methacrylate.

**4.** A molding composition as claimed in claim 3, characterized in that the monomer is hydroxyethyl or hydroxypropyl (meth)acrylate.

**5.** A molding composition as claimed in claim 1, characterized in that the comonomer is glycidyl acrylate or glycidyl methacrylate.

**6.** A molding composition as claimed in claim 1, containing
from 75 to 55 % by weight of the hard matrix A and
from 45 to 25 % by weight of the soft phase B.

**7.** A molding composition as claimed in claim 1, as obtained by polymerization of the mixture of the monomers $a_{11}$ and $a_{12}$ in the presence of from 6 to 12 % by weight, based on $a_{11}$ and $a_{12}$, of polybutadiene.

**8.** A molding composition as claimed in claim 1, also containing a customary additive C in a customary amount.

**9.** The use of the molding composition as claimed in claim 1 for producing moldings.

**Revendications**

**1.** Masse à mouler thermoplastique résiliente contenant, chaque fois rapportés à A + B,

A: de 80 à 55% en poids d'une matrice dure constituée par un copolymère d'au moins 98 unités de % en poids d'un monomère vinylaromatique $a_{11}$ contenant de 8 à 10 atomes de C et d'au moins un comonomère $a_{12}$ en une fraction de 0,1 à 2% en poids, rapportée à A, et

B: de 45 à 20% en poids d'une phase molle distribuée de manière uniforme dans la matrice dure, qui présente un diamètre moyen de particules, $d_{50}$ (moyenne en volume), de 3,5 à 9 $\mu$m,

telle qu'on l'obtient par polymérisation du mélange des monomères $a_{11}$ et $a_{12}$ en présence d'un élastomère $a_{11}$ (caoutchouc) avec récupération ultérieure du produit valable,

caractérisée en ce que le comonomère $a_{12}$ est choisi parmi le groupe comprenant l'acrylamide, le méthacrylamide, le N-méthylacrylamide ou le N-méthylméthacrylamide, ou bien répond à la formule générale 1

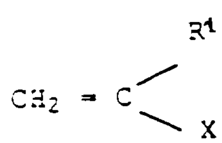

dans laquelle X représente les radicaux $-OR^2$, $COOR^2$ ou $-CONHR^2$ et

$R^1$ représente un atome d'hydrogène ou un groupe méthyle

et

$R^2$ et $R^3$ représentent chacun un radical alkyle contenant 1, respectivement 2 à 10 atomes de C, qui porte au moins un groupe OH ou un groupe époxyde ou encore au moins un autre groupe polaire.

2. Masse à mouler selon la revendication 1, contenant comme comonomères de l'acrylamide, du méthacrylamide, du N-méthylacrylamide, du N-méthylméthacrylamide ou un mélange de ces monomères.

3. Masse à mouler selon la revendication 1, contenant comme comonomères, un acrylate d'hydroxyalkyle ou un méthacrylate d'hydroxyalkyle.

4. Masse à mouler selon la revendication 3, contenant comme monomères, le (méth)acrylate d'hydroxyéthyle ou d' hydroxypropyle.

5. Masse à mouler selon la revendication 1, contenant comme comonomère, l'acrylate de glycidyle ou le méthacrylate de glycidyle.

6. Masse à mouler selon la revendication 1, contenant
   de 75 à 55% en poids de la matrice dure A et
   de 45 à 25% en poids de la phase molle B.

7. Masse à mouler selon la revendication 1, telle qu'on l'obtient par polymérisation d'un mélange des monomères $a_{11}$ et $a_{12}$ en présence de 6 à 12% en poids de polybutadiène, rapportés à $a_{11}$ et à $a_{12}$, polybutadiène.

8. Masse à mouler selon la revendication 1, contenant, en outre, des additifs habituels C dans les quantités habituelles.

9. Utilisation d'une masse à mouler selon la revendication 1 pour la préparation d'éléments moulés.